(19) Europäisches Patentamt
European Patent Office
Office européen des brevets

(11) **EP 4 054 272 A1**

(12) **EUROPEAN PATENT APPLICATION**
published in accordance with Art. 153(4) EPC

(43) Date of publication:
**07.09.2022 Bulletin 2022/36**

(21) Application number: **19954114.5**

(22) Date of filing: **29.11.2019**

(51) International Patent Classification (IPC):
***H04W 74/08*** *(2009.01)*

(52) Cooperative Patent Classification (CPC):
**H04W 74/08**

(86) International application number:
**PCT/CN2019/121924**

(87) International publication number:
**WO 2021/102895 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **HUANG, Huang
  Shenzhen, Guangdong 518129 (CN)**
• **SHAO, Hua
  Shenzhen, Guangdong 518129 (CN)**
• **YAN, Mao
  Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **METHOD AND APPARATUS FOR RANDOM ACCESS**

(57)     This application provides a random access method and apparatus. In the method, a terminal device may determine a first random access resource for sending a random access preamble by using reference signal grouping information. This helps the terminal device send the random access preamble to a network device on the first random access resource, thereby improving a random access success rate.

FIG. 5

**Description**

**TECHNICAL FIELD**

This application relates to the communication field, and more specifically, to a random access method and apparatus in the communication field.

**BACKGROUND**

In a wireless communication technology, a terminal device obtains uplink synchronization with a network device through a random access procedure. When initiating the random access procedure, the terminal device needs to first determine a random access resource based on random resource configuration information broadcast by the network device. The random resource configuration information is used to indicate a correspondence between a reference signal and a random access resource. Specifically, if the terminal device detects a specific reference signal, the terminal device determines a random access resource based on the random resource configuration information, and sends a random access preamble (preamble) to the network device on the determined random access resource. The network device may send one reference signal by using one beam, and each reference signal sent by using each beam corresponds to a corresponding random access resource.

Currently, in new radio (new radio, NR), a protocol specifies that the network device sends a maximum of 64 reference signals by using 64 transmit beams. As a network throughput increases, a higher frequency band is required. It is difficult to cover all frequency bands by using 64 transmit beams. To cover all the frequency bands, a quantity of synchronization signal/physical broadcast channel SS/PBCH blocks (SSB for short below) needs to be increased. As a result, overheads of the SSB are increased. To avoid an increase in the overheads of the SSB, one SSB may be sent by using a plurality of peaks of one beam. The multi-peak beam may cover a plurality of directions, and therefore, the overheads of the SSB can be reduced. In this case, a plurality of peaks of one beam are used to send one SSB. When receiving the SSB, the terminal device cannot determine a peak, of the beam, at which the SSB is received. Correspondingly, the terminal device cannot determine a resource for sending a random access preamble. Consequently, random access cannot be initiated. Therefore, a random access resource determining method is urgently needed.

**SUMMARY**

This application provides a random access method and apparatus, so that a random access resource can be determined, and random access can be initiated by using the random access resource. Therefore, a random access success rate can be improved.

According to a first aspect, a random access method is provided. The method includes: A terminal device obtains reference signal grouping information, where the grouping information is used to indicate a reference signal grouping status. If the terminal device detects at least one reference signal sent by a network device, the terminal device determines, based on the grouping information, a first random access resource for sending a random access preamble. The terminal device sends the random access preamble to the network device on the first random access resource.

In the foregoing technical solution, the terminal device may determine the first random access resource for sending the random access preamble by using the reference signal grouping information. This helps the terminal device send the random access preamble to the network device on the first random access resource, thereby improving a random access success rate.

Optionally, the reference signal may be an SSB.

Optionally, the terminal device may obtain the grouping information from the network device.

Optionally, the grouping information is used to indicate a quantity of reference signals in each group. For example, there is one group of reference signals by default, and a quantity of groups does not need to be indicated. Optionally, the grouping information is used to indicate a total quantity of reference signal groups. For example, each group of reference signals includes one reference signal by default, and a quantity of reference signals in each group does not need to be indicated.

Optionally, the grouping information is used to indicate that M reference signals form one group, and there are N groups of reference signals in total, where M and N are positive integers.

Optionally, that the terminal device determines, based on the grouping information, a first random access resource for sending a random access preamble includes: The terminal device determines a first detection sequence based on the grouping information. The terminal device determines the first random access resource based on the first detection sequence.

Optionally, if the grouping information is used to indicate that M reference signals form one group, and there are N groups of reference signals in total, where M and N are positive integers, a length of the first detection sequence is related to M.

Optionally, the first detection sequence may be a quantized detection sequence. For example, the first detection sequence includes 0 and 1. 1 indicates that a reference signal is received, and 0 indicates that a reference signal is not received.

In some possible implementations, that the terminal device determines the first random access resource based on the first detection sequence includes:

The terminal device determines, based on the first detection sequence and a first correspondence, the first random access resource for sending the random access preamble, where the first correspondence is used to indicate that at least one detection sequence corresponds to at least one random access resource, the at least one detection sequence includes the first detection sequence, and the at least one random access resource includes the first random access resource.

In some possible implementations, the method further includes: The terminal device obtains the first correspondence from the network device.

Optionally, the first correspondence may be specified in a protocol.

In some possible implementations, that the terminal device determines the first random access resource based on the first detection sequence includes: The terminal device determines, based on the first detection sequence and a second correspondence, a first peak at which the network device sends the at least one reference signal, where the second correspondence is used to indicate that at least one detection sequence corresponds to at least one peak, the at least one detection sequence includes the first detection sequence, and the at least one peak includes the first peak.

The terminal device determines, based on the first peak and a third correspondence, the first random access resource for sending the random access preamble, where the third correspondence is used to indicate that the at least one peak corresponds to at least one random access resource, and the at least one random access resource includes the first random access resource.

In some possible implementations, the method further includes: The terminal device obtains the second correspondence and the third correspondence from the network device.

Optionally, the second correspondence and the third correspondence may be specified in a protocol.

In some possible implementations, if the terminal device detects the at least one reference signal, the terminal device obtains the first detection sequence based on the grouping information and an index of the at least one reference signal.

Specifically, the terminal device may determine a total quantity of reference signals based on the grouping information, and may preset indexes of the reference signals. For example, if the terminal device determines that a quantity of reference signals is M*N, indexes of M*N reference signals are respectively 0, 1,..., M*N-1, where * indicates a multiplication operation.

In some possible implementations, the grouping information is further used to indicate peak information for sending each group of reference signals.

That the terminal device determines, based on the grouping information, a first random access resource for sending a random access preamble includes:

The terminal device determines a first peak based on the grouping information.

The terminal device determines, based on the first peak and a fourth correspondence, the first random access resource for sending the random access preamble, where the fourth correspondence is used to indicate that at least one peak corresponds to at least one random access resource, the at least one peak includes the first peak, and the at least one random access resource includes the first random access resource.

Optionally, the peak information of each group of reference signals is used to indicate a peak used by the network device to send each group of reference signals.

Optionally, if the terminal device detects the at least one reference signal sent by the network device, the terminal device determines the first peak based on a value of the reference signal, N groups of reference signals indicated by the grouping information, and the peak information of each group of reference signals.

Optionally, the terminal device may further obtain, from the network device, a parameter used to determine the first peak. For example, the parameter is a parameter of a basis of a peak.

In some possible implementations, the method further includes: The terminal device obtains a reference signal received power RSRP threshold from the network device. The method further includes: If an RSRP of the at least one reference signal is greater than the RSRP threshold, the terminal device determines that the at least one reference signal is detected.

Optionally, the RSRP threshold may be preset.

In some possible implementations, that a terminal device obtains reference signal grouping information includes: The terminal device obtains the reference signal grouping information from the network device.

In some possible implementations, the method further includes: The terminal device receives a total quantity of peaks of the reference signal sent by the network device.

In some possible implementations, the method further includes: The terminal device may receive a quantity of peaks of each reference signal sent by the network device. The terminal device may determine, based on a correspondence between a beam and a random access resource, a correspondence between a peak of each reference signal and a random access resource.

According to a second aspect, a random access method is provided. The method includes: A network device sends reference signal grouping information to a terminal device, where the grouping information is used for a reference signal grouping status, and the grouping information is used by the terminal device to determine a first random access resource. The network device sends a reference signal.

The network device receives a random access preamble from the terminal device on the first random access resource.

In the foregoing technical solution, the network device may send the reference signal grouping information to the terminal device, so that the terminal device can determine, by using the grouping information, the first random access resource for sending the random access preamble. Therefore, a random access success rate may be improved.

Optionally, the reference signal may be an SSB.

Optionally, the grouping information is used to indicate a quantity of reference signals in each group. For example, there is one group of reference signals by default, and a quantity of groups does not need to be indicated. Optionally, the grouping information is used to indicate a total quantity of reference signal groups. For example, each group of reference signals includes one reference signal by default, and a quantity of reference signals in each group does not need to be indicated.

Optionally, the grouping information is used to indicate that M reference signals form one group, and there are N groups of reference signals in total, where M and N are positive integers.

Optionally, the grouping information is specifically used by the terminal device to determine a first detection sequence, where the first detection sequence is used by the terminal device to determine the first random access resource. Optionally, if the grouping information is used to indicate that M reference signals form one group, and there are N groups of reference signals in total, where M and N are positive integers, a length of the first detection sequence is related to M.

Optionally, the first detection sequence may be a quantized detection sequence. For example, the first detection sequence includes 0 and 1. 1 indicates that a reference signal is received, and 0 indicates that a reference signal is not received.

Optionally, the grouping information is specifically used by the terminal device to determine a first peak, where the first peak is used by the terminal device to determine the first random access resource.

In some possible implementations, the method further includes: The network device determines, based on the first random access resource, the first peak for sending a random access response to the terminal device.

The network device sends the random access response to the terminal device by using the first peak.

In some possible implementations, that the network device determines, based on the first random access resource, the first peak for sending a random access response to the terminal device includes:

The network device determines the first detection sequence based on a first correspondence and the first random access resource, where the first correspondence is used to indicate that at least one detection sequence corresponds to at least one random access resource, the at least one detection sequence includes the first detection sequence, and the at least one random access resource includes the first random access resource.

The network device determines, based on a second correspondence and the first detection sequence, the first peak for sending the random access response to the terminal device, where the second correspondence is used to indicate that the at least one detection sequence corresponds to at least one peak, the at least one detection sequence includes the first detection sequence, and the at least one peak includes the first peak.

In some possible implementations, the method further includes: The network device sends the first correspondence and the second correspondence to the terminal device.

In some possible implementations, that the network device determines, based on the first random access resource, the first peak for sending a random access response to the terminal device includes: The network device determines, based on a third correspondence and the first random access resource, the first peak for sending the random access response to the terminal device, where the third correspondence is used to indicate that at least one peak corresponds to at least one random access resource, and the at least one random access resource includes the first random access resource.

In some possible implementations, the method further includes: The network device sends the third correspondence to the terminal device.

In some possible implementations, the grouping information is further used to indicate peak information of each group of reference signals. The grouping information is specifically used by the terminal device to determine a first peak, where the first peak is used by the terminal device to determine the first random access resource. That the network device determines, based on the first random access resource, the first peak for sending a random access response to the terminal device includes:

The network device determines, based on the first random access resource and a fourth correspondence, the first peak for sending the random access response to the terminal device, where the fourth correspondence is used to indicate that at least one peak corresponds to at least one random access resource, the at least one peak includes the first peak, and the at least one random access resource includes the first random access resource.

In some possible implementations, the method further includes: The network device sends a reference signal received power RSRP threshold to the terminal device. In some possible implementations, the method further includes: The network device sends a total quantity of peaks of the reference signal to the terminal device.

In some possible implementations, the method further includes: The network device sends a quantity of peaks of each reference signal to the terminal device.

According to a third aspect, a random access apparatus is provided. The apparatus is configured to perform the method according to any one of the first aspect or the possible implementations of the first aspect. Specifically, the apparatus may include a module configured to perform the method according to any one of the first aspect or the possible implementations of the first aspect.

According to a fourth aspect, a random access apparatus is provided. The apparatus is configured to perform the method according to any one of the second aspect or the possible implementations of the second aspect. Specifically, the apparatus may include a module configured to perform the method according to any one of the second aspect or the possible implementations of the second aspect.

According to a fifth aspect, a communication apparatus is provided. The communication apparatus includes a processor, the processor is coupled to a memory, the memory is configured to store a computer program or instructions, and the processor is configured to execute the computer program or the instructions stored in the memory, so that the method in the first aspect is performed.

For example, the processor is configured to execute the computer program or the instructions stored in the memory, so that the communication apparatus performs the method in the first aspect.

Optionally, the communication apparatus includes one or more processors.

Optionally, the communication apparatus may further include the memory coupled to the processor.

Optionally, the communication apparatus may include one or more memories.

Optionally, the memory and the processor may be integrated together, or may be separately disposed.

Optionally, the communication apparatus may further include a transceiver.

According to a sixth aspect, a communication apparatus is provided. The communication apparatus includes a processor, the processor is coupled to a memory, the memory is configured to store a computer program or instructions, and the processor is configured to execute the computer program or the instructions stored in the memory, so that the method in the second aspect is performed.

For example, the processor is configured to execute the computer program or the instructions stored in the memory, so that the communication apparatus performs the method in the second aspect.

Optionally, the communication apparatus includes one or more processors.

Optionally, the communication apparatus may further include the memory coupled to the processor.

Optionally, the communication apparatus may include one or more memories.

Optionally, the memory and the processor may be integrated together, or may be separately disposed.

Optionally, the communication apparatus may further include a transceiver.

According to a seventh aspect, this application provides a communication system. The system includes the apparatus provided in the third aspect and the apparatus provided in the fourth aspect.

Alternatively, the system includes the apparatus provided in the fifth aspect and the apparatus provided in the sixth aspect.

According to an eighth aspect, a computer-readable storage medium is provided. The computer-readable storage medium stores a computer program (or may be referred to as instructions or code) used to implement the method in the first aspect.

For example, when the computer program is executed by a computer, the computer is enabled to perform the method in the first aspect. The computer may be a communication apparatus.

According to a ninth aspect, a computer-readable storage medium is provided. The computer-readable storage medium stores a computer program (or may be referred to as instructions or code) used to implement the method in the first aspect or the second aspect.

For example, when the computer program is executed by a computer, the computer is enabled to perform the method in the second aspect. The computer may be a communication apparatus.

According to a tenth aspect, this application provides a chip, including a processor. The processor is configured to read and execute a computer program stored in a memory, to perform the method according to any one of the first aspect and the possible implementations of the first aspect.

Optionally, the chip further includes the memory, and the processor is connected to the memory through a circuit or a wire.

Further, optionally, the chip further includes a communication interface.

According to an eleventh aspect, this application provides a chip, including a processor. The processor is configured to read and execute a computer program stored in a memory, to perform the method according to any one of the second aspect and the possible implementations of the second aspect.

Optionally, the chip further includes the memory, and the processor is connected to the memory through a circuit or a wire.

Further, optionally, the chip further includes a communication interface.

According to a twelfth aspect, this application provides a computer program product. The computer program product includes a computer program (or may be referred to as instructions or code), and when the computer program is executed by a computer, the computer is enabled to implement the method in the first aspect. The computer may be a communication apparatus.

According to a thirteenth aspect, this application provides a computer program product. The computer program product includes a computer program (or may be referred to as instructions or code), and when the computer program is executed by a computer, the computer is enabled to implement the method in the second aspect. The computer may be a communication apparatus.

## BRIEF DESCRIPTION OF DRAWINGS

FIG. 1 is a diagram of an architecture of a communication system according to an embodiment of this application;
FIG. 2 is a schematic diagram of a random access procedure according to an embodiment of this application;
FIG. 3 is a schematic diagram of sending a reference signal by using a plurality of peaks of one beam according to an embodiment of this application;
FIG. 4 is a schematic diagram of a peak according to an embodiment of this application;
FIG. 5 is a schematic diagram of a random access method according to an embodiment of this application;
FIG. 6 is a schematic diagram of another random access method according to an embodiment of this application;
FIG. 7 is a schematic diagram of still another random access method according to an embodiment of this application;
FIG. 8 is a schematic diagram of still another random access method according to an embodiment of this application;
FIG. 9 is a schematic block diagram of a random access apparatus according to an embodiment of this application;
FIG. 10 is a schematic block diagram of another random access apparatus according to an embodiment of this application;
FIG. 11 is a schematic block diagram of a communication apparatus according to an embodiment of this application;
FIG. 12 is a schematic block diagram of another communication apparatus according to an embodiment of this application; and
FIG. 13 is a schematic block diagram of still another communication apparatus according to an embodiment of this application.

## DESCRIPTION OF EMBODIMENTS

Technical solutions in embodiments of this application may be applied to various communication systems, for example, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, and a future 5th generation (5th generation, 5G) system or a new radio (new radio, NR) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), or the like. This is not limited in embodiments of this application.

A network device in embodiments of this application may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission and reception point, TRP), and the like. Alternatively, the device may be a gNB or a transmission point (TRP or TP) in a fifth generation (fifth generation, 5G) system, for example, a new radio (new radio, NR) system, or one antenna panel or a group of antenna panels (including a plurality of antenna panels) of a base station in a 5G system. Alternatively, the device may be a network node, for example, a baseband unit (BBU) or a distributed unit (distributed unit, DU), that constitutes a gNB or a transmission point.

In some deployments, the gNB may include a centralized unit (centralized unit, CU) and a distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU, or being sent by the DU and the AAU. It may be understood that the network device may be a device including one or more of a CU node, a DU node, and an AAU node. In addition, the CU may be classified as a network device in an access network (radio access network, RAN), or may be classified as a network device in a core network (core network, CN). This is not limited in this application.

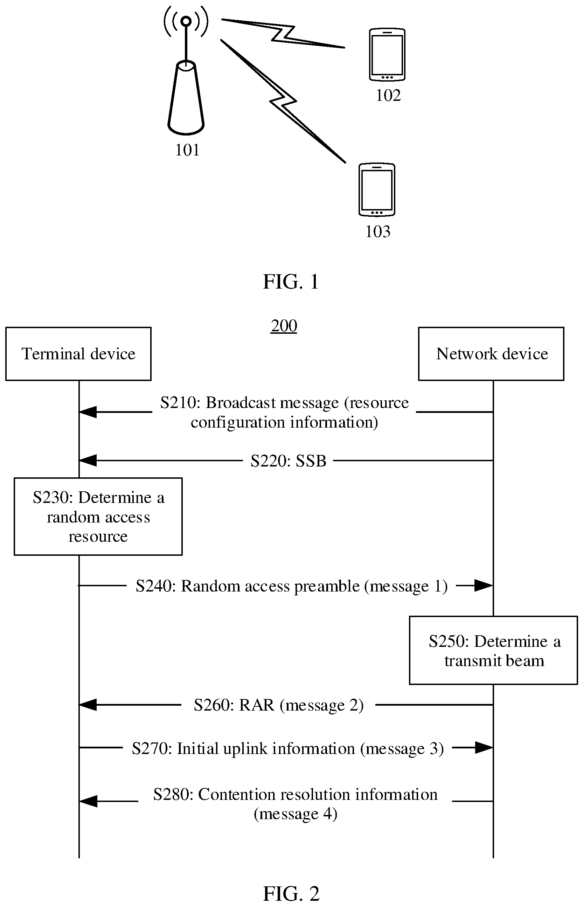

FIG. 1 is a diagram of an architecture of a communication system according to an embodiment of this application. As shown in FIG. 1, the wireless communication system may include at least one network device 101. The network device 101 communicates with one or more terminal devices (for example, a terminal device 102 and a terminal device 103 that are shown in FIG. 1). When the network device sends a signal, the network device is a transmit end, and the terminal device is a receive end. On the contrary, when the terminal device sends a signal, the terminal device is a transmit end, and the network device is a receive end.

In the wireless communication system, before communicating with the network device, the terminal device first needs to initiate a random access procedure to obtain uplink synchronization with the network device. FIG. 2 is a schematic diagram 200 of a random access procedure. The random access procedure includes the following steps:

S210: A network device sends a broadcast message to a terminal device, where the broadcast message carries resource configuration information, and the resource configuration information is used to indicate a correspondence between a synchronization signal/physical broadcast channel (synchronization signal/physical broadcast channel, SS/PBCH) block and a random access resource.

The random access resource may include one or more of a time domain resource, a frequency domain resource, and a code domain resource.

S220: The network device sends the SSB in a space scanning manner, and the terminal device performs detection on the SSB.

Specifically, in S220, the network device sends one SSB by using one transmit beam, and one transmit beam corresponds to a unique SSB. In other words, the resource configuration information in S220 may also be understood as being used to indicate a correspondence between a transmit beam and a random access resource, and one transmit beam of the network device corresponds to one random access resource (or one group of random access resources).

S230: The terminal device determines a random access resource based on the detected SSB and the resource configuration information in S210.

S240: The terminal device sends a random access preamble (preamble), also referred to as a message 1, to the network device on the random access resource determined in S230. The network device receives, on the random access resource, the random access preamble sent by the terminal device.

S250: The network device determines, based on the random access resource in S240 and the resource configuration information in S210, a transmit beam for sending a random access response (random access response, RAR).

Specifically, S250 includes: Based on a random access resource on which the network device receives the random access preamble, the network device may determine, based on the resource configuration information, a beam on which the terminal device receives the SSB, and sends the RAR by using the beam.

S260: The network device sends the RAR, also referred to as a message 2, to the terminal device by using the transmit beam determined in S250. The RAR carries at least one of uplink grant information, a temporary cell radio network temporary identifier (temporary cell radio network temporary identifier, TC-RNTI), and a timing advance (timing advance, TA).

The uplink grant information is used to indicate a resource for sending initial uplink information, and the TA is used by the terminal device to obtain uplink timing.

S270: The terminal device sends the initial uplink information, also referred to as a message 3, to a base station on a resource indicated by the uplink grant information. The initial uplink information carries a terminal device contention resolution identity (UE Contention Resolution Identity).

S280: After the base station receives the initial uplink information of the terminal device, the base station performs contention resolution, and the base station sends contention resolution information, also referred to as a message 4, to the terminal device.

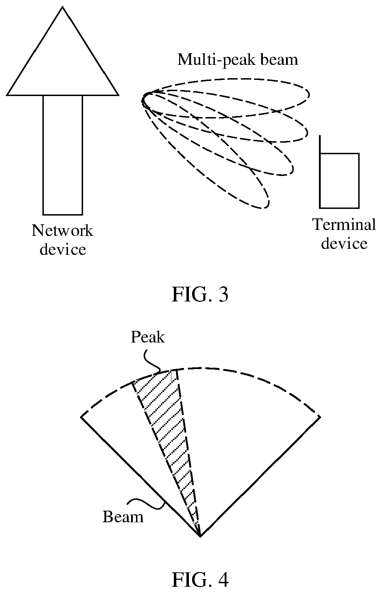

In NR, a protocol specifies that in S220, the network device sends a maximum of 64 reference signals by using 64 transmit beams. As a network throughput increases, a higher frequency band is required. It is difficult to cover all frequency bands by using 64 transmit beams. To cover all the frequency bands, a quantity of SSBs needs to be increased. Consequently, overheads of the SSB are increased, and more resources need to be occupied to send a larger quantity of SSBs. To reduce the quantity of SSBs, as shown in FIG. 3, one SSB may be sent by using a plurality of peaks of one beam. The multi-peak beam may cover a plurality of directions, and therefore, the overheads of the SSB can be reduced. In this case, a plurality of peaks of one beam are used to send one SSB. When receiving the SSB, the terminal device cannot determine a peak, of the beam, at which the SSB is received. Correspondingly, in the random access procedure, in S230, the terminal device cannot determine a resource for sending the random access preamble, and consequently cannot initiate random access. In addition, the network device sends the SSB by using the plurality of peaks, but cannot determine the peak at which the terminal device receives the SSB. In this case, even if the network device receives the random access preamble, in S250, the network device cannot determine a peak that is used to send the random access response to the terminal device. Therefore, random access fails.

It may be understood that a peak in embodiments of this application may be a component or a subcomponent of a beam (beam), and the peak may also be referred to as a narrow peak, a sub-beam (sub-beam), a narrow beam, or a beam component (beam component). As shown in FIG. 4, a peak may be a sub-direction of a specific beam or L degrees of a specific beam. For example, L is equal to five.

With reference to the accompanying drawings, the following describes a random access method 500 according to an embodiment of this application. The method 500 includes the following steps.

S510: A network device sends reference signal grouping information to a terminal device, where the grouping information is used to indicate a reference signal grouping status.

Correspondingly, the terminal device receives the reference signal grouping information sent by the network device.

Optionally, the method 500 may not include S510. The network device does not need to configure the reference signal grouping information, and the terminal device may obtain the reference signal grouping information based on a protocol specification. Alternatively, reference signals may not be grouped, and all the reference signals form one group.

Optionally, the grouping information is used to indicate a quantity of reference signals in each group. For example, there is one group of reference signals by default, and a quantity of groups does not need to be indicated.

Optionally, the grouping information is used to indicate a total quantity of reference signal groups. For example, each group of reference signals includes one reference signal by default, and a quantity of reference signals in each group does not need to be indicated.

Optionally, the grouping information is used to indicate that M reference signals form one group, and there are N groups of reference signals in total, where M and N are positive integers.

For example, the grouping information is used to indicate that four reference signals form one group, and there are 16 groups of reference signals in total. For another example, the grouping information is used to indicate that 64 reference signals form one group, and there is one group of reference signals in total.

It should be noted that the reference signal mentioned in this embodiment of this application may be an SSB. The SSB includes a primary synchronization signal (primary synchronization signal, PSS), a secondary synchronization signal (secondary synchronization signal, SSS), a physical broadcast channel (physical broadcast channel, PBCH), and a demodulation reference signal (demodulation reference signal, DMRS) required for demodulating the PBCH. The PSS and the SSS are used by the terminal device to perform downlink synchronization, including timing synchronization, frame synchronization, and symbol synchronization. The PSS and the SSS are further used to obtain a cell identifier (ID) and measure cell signal quality.

S520: The network device sends the reference signal to the terminal device.

Specifically, S520 includes: The network device sends the reference signal in a broadcast manner.

If the grouping information is used to indicate that M reference signals form one group, and there are N groups of reference signals in total, S520 includes: The network device sends M*N reference signals to the terminal device.

Optionally, the network device may send the M*N reference signals by using M*N beams, where one beam corresponds to one reference signal. In addition, when the network device sends the M*N beams, each beam has a plurality of peaks. In this way, an SSB may be sent by using a plurality of peaks of one beam, where * indicates a multiplication operation.

It should be noted that a sequence of S510 and S520 is not limited.

S530: Correspondingly, the terminal device performs detection on the reference signal sent by the network device, and if the terminal device detects at least one reference signal, the terminal device determines, based on the grouping information, a first random access resource for sending a random access preamble.

In a possible implementation, S530 includes: The terminal device determines a first detection sequence based on the grouping information. The terminal device determines the first random access resource based on the first detection sequence.

Optionally, if the grouping information is used to indicate that M reference signals form one group, and there are N groups of reference signals in total, a length of the first detection sequence is related to M.

The following describes how to determine the first detection sequence with reference to an embodiment.

Specifically, if the terminal device detects the at least one reference signal, the terminal device may obtain the first detection sequence based on the grouping information and an index of the at least one reference signal. Specifically, the terminal device may determine a total quantity of reference signals based on the grouping information, and may preset indexes of the reference signals. For example, if the terminal device determines that a quantity of reference signals is M*N, indexes of M*N reference signals are respectively 0, 1, ..., M*N-1.

For example, if the grouping information indicates that four reference signals form one group, and there are 16 groups of reference signals in total, it is assumed by default that indexes of 64 reference signals are respectively 0, ..., and 63. In this case, if an index of only one reference signal received by the terminal device is 62, it may be determined that the first detection sequence is 0010; if indexes of two reference signals received by the terminal device are respectively 56 and 57, it may be determined that the first detection sequence is 1100. In other words, in this case, the first detection sequence is a sequence obtained through quantization.

Optionally, if one bit is used to indicate whether a reference signal is detected, the length of the first detection sequence is M. If p bits are used to indicate whether a reference signal is detected, the length of the first detection sequence is pM, where for example, p=2. With reference to the example, if an index of one reference signal received by the terminal device is 62, it may be determined that the length of the first detection sequence is 00001100.

It may be understood that, if the terminal device receives two or more reference signals, and indexes of the two or more reference signals are not several consecutive indexes, the terminal device may select an index of a reference signal with a higher or highest reference signal received power (reference signal receiving power, RSRP) to determine the first detection sequence. Alternatively, the terminal device may select any one of the indexes to determine the first detection sequence. With reference to the example, if indexes of reference signals received by the terminal device are respectively 56, 57, and 62, it can be learned based on the grouping information that reference signals whose indexes are 56 and 57 belong to a same group, but do not belong to a same group with a reference signal whose index is 62. In this way, a sequence corresponding to the reference signals whose indexes are 56 and 57 is 1100, and a sequence corresponding to the reference signal whose index is 62 is 0010. The terminal device may select either of the two sequences as the first detection sequence. Alternatively, the terminal device determines an index of a reference signal with a highest RSRP in the three reference signals whose indexes are 56, 57, and 62. For example, if the reference signal whose index is 62 has the highest RSRP, the terminal device may determine that the first detection sequence is 0010.

Optionally, the terminal device may determine, based on an RSRP threshold, whether a reference signal is detected. If an RSRP of a specific reference signal is greater than the RSRP threshold, the terminal device may determine that the reference signal is detected. If an RSRP of a specific reference signal is less than the RSRP threshold, the terminal device may determine that no reference signal is detected. The RSRP threshold may be preset, or may be sent by the network device to the terminal device.

With reference to two manners, the following describes how to determine the first random access resource based on the first detection sequence.

Manner 1: The terminal device determines, based on the first detection sequence and a first correspondence, the first random access resource for sending the random access preamble. The first correspondence is used to indicate that at least one detection sequence corresponds to at least one random access resource, the at least one detection sequence includes the first detection sequence, and the at least one random access resource includes the first random access resource. For example, the first correspondence is used to indicate that each of the at least one detection sequence is in a one-to-one correspondence with each of the at least one random access resource.

Optionally, the terminal device stores the first correspondence, where the first correspondence may be sent by the network device to the terminal device (for example, sent by using the broadcast message in S210) or specified in a protocol. The first correspondence is shown in Table 1. In Table 1, n is a positive integer. For example, n is 16.

**Table 1**

| Detection sequence | Random access resource |
|---|---|
| Detection sequence 1 | Random access resource 1 |
| Detection sequence 2 | Random access resource 2 |
| Detection sequence 3 | Random access resource 3 |
| Detection sequence 4 | Random access resource 4 |
| ... | ... |
| Detection sequence n | Random access resource n |

Manner 2: The terminal device determines, based on the first detection sequence and a second correspondence, a first peak at which the network device sends the at least one reference signal, where the second correspondence is used to indicate that at least one detection sequence corresponds to at least one peak, the at least one detection sequence includes the first detection sequence, and the at least one peak includes the first peak. For example, the second correspondence is used to indicate that each of the at least one detection sequence is in a one-to-one correspondence with each of the at least one peak. The terminal device determines, based on the first peak and a third correspondence, the first random access resource for sending the first random access preamble, where the third correspondence is used to indicate that the at least one peak corresponds to at least one random access resource, and the at least one random access resource includes the first random access resource. For example, the third correspondence is used to indicate that each of the at least one peak is in a one-to-one correspondence with each of the at least one random access resource.

Optionally, the terminal device stores the second correspondence and the third correspondence. The second correspondence and the third correspondence may be sent by the network device to the terminal device (for example, sent by using the broadcast message in S210), or may be specified in a protocol. Optionally, one of the second correspondence and the third correspondence is sent by the network device to the terminal device, and the other may be specified in the protocol. The second correspondence is shown in Table 2, and the third correspondence is shown in Table 3. In Table 2 and Table 3, m is a positive integer, for example, m is 15.

**Table 2**

| Detection sequence | Peak |
|---|---|
| Detection sequence 1 | Peak 1 |
| Detection sequence 2 | Peak 2 |
| Detection sequence 3 | Peak 3 |
| Detection sequence 4 | Peak 4 |
| ... | ... |
| Detection sequence m | Peak m |

**Table 3**

| Peak | Random access resource |
|---|---|
| Peak 1 | Random access resource 1 |
| Peak 2 | Random access resource 2 |
| Peak 3 | Random access resource 3 |
| Peak 4 | Random access resource 4 |
| ... | ... |
| Peak m | Random access resource m |

Optionally, the random access resource mentioned in the foregoing first correspondence between a detection sequence and a random access resource or the foregoing third correspondence between a peak and a random access resource may be a random access resource configured by the network device, or may be determined based on a correspondence between a beam and a random access resource. Specifically, the resource configuration information in S210 may be used to configure the first correspondence or the third correspondence, or the resource configuration information in S210 may be used to indicate a relationship between a beam and a random access resource and configure a quantity of peaks of each beam (each reference signal). In this way, the terminal device may determine, based on the relationship between a beam and a random access resource and the quantity of peaks of each beam, a random access resource corresponding to each peak. For example, the resource configuration information indicates that there are 64 random access preambles (where a random access resource may include a random access preamble) in total on one random access occasion (RACH occasion, RO), and there are eight beams in total, where each beam has four peaks (this is an example, and the quantity of peaks of each beam may be different). In this case, each peak corresponds to two ((64/8)/4) random access preambles, and two consecutive random access preambles of one beam may be allocated to one peak.

In another possible implementation, S530 includes: The terminal device determines a first peak based on the grouping information. The terminal device determines, based on the first peak and a fourth correspondence, the first random access resource for sending the random access preamble. The fourth correspondence is used to indicate that at least one peak corresponds to at least one random access resource, the at least one peak includes the first peak, and the at least one random access resource includes the first random access resource. For example, the fourth correspondence may be shown in Table 3.

The following describes how to determine the first peak with reference to an embodiment.

Specifically, the terminal device may determine the first peak based on the reference signal grouping information by using a value (unquantized value) of a group of received reference signals and a preset algorithm.

The following is an example:

If the reference signal grouping information is used to indicate that four reference signals form one group, and there are 16 groups of reference signals in total, the terminal device may obtain the first peak through solution based on a value of a group of received reference signals, and values of reference signals received by the terminal device at four times may be represented as: $y_i = aDb_i + z_i$.

$i = 1, ...,4$, and $y_i$ is a value of a reference signal received at a time. If no reference signal is received at a specific time, a value of the reference signal is 0. $a$ is a complex vector of $1 \times N$, $N$ is a total quantity of peaks of the reference signal, and an element in an $n^{th}$ ($n = 1,...,N$) column of $a$ indicates a channel complex gain in an $n^{th}$ peak direction. $D$ is a peak base of $N \times N$, and a specific column of $D$ indicates a direction vector of a narrow peak. For example, a specific column may be a discrete Fourier transform (discrete fourier transformation, DFT) vector. $b_i$ is multi-peak information of the reference signal, and $b_i$ is a vector of $N \times 1$. The multi-peak information of the reference signal is used to indicate peaks at which the reference signal can be sent. For example, multi-peak information of a reference signal is $(100010011010111)^T$, where 0 indicates that no reference signal is sent at the peak, and 1 indicates that the reference signal is sent at the peak. In this way, the reference signal may be sent by using eight of 15 peaks. $z_i$ is noise.

In the foregoing formula, $D$ may be preset or configured by the network device, $b_i$ may also be preset or configured by the network device. The terminal device may determine $y_i$ when receiving a reference signal once. In this case, when receiving a group of reference signals, the terminal device may determine $a$ based on the foregoing formula. In $N$ columns of $a$, a peak corresponding to a column with a largest value is the first peak. It should be noted that the M reference signals indicated by the reference signal grouping information may be configured as M in a group, so that $a$ can be determined according to the foregoing algorithm. A quantity of non-sparse elements in $a$ may be set as being equal to M, and the non-sparse element in $a$ may be greater than a preset value (For example, the preset value is 0). For example, $N = 15$, that is, $a$ is a complex vector of $1 \times 15$. In this case, to determine 15 elements of $a$, at least 15 equations are required (that is, reference signals need to be received for at least 15 times). However, because $a$ may be a sparse matrix, reference signals may be received less than 15 times, for example, four times. In this case, M=4.

In this embodiment of this application, the foregoing is merely an example for describing how to obtain the first peak through solution. The first peak may alternatively be obtained in another manner. This is not limited in this application. In this embodiment of this application, a parameter used to obtain the first peak through solution may be preset or configured by the network device. This is not limited in this application.

S540: The terminal device sends the random access preamble to the network device on the first random access resource.

Correspondingly, the network device receives, on the first random access resource, the random access preamble sent by the terminal device.

In an optional embodiment, the method 500 further includes: The network device determines, based on the first random access resource, the first peak for sending a random access response to the terminal device. In this way, the network device may send the random access response to the terminal device by using the first peak.

If the grouping information is used by the terminal device to determine the first detection sequence, and the first detection sequence is used by the terminal device to determine the first random access resource. That the network device determines, based on the first random access resource, the first peak for sending a random access response to the terminal device may be implemented in one of the following two manners:

Manner 1: The network device determines the first detection sequence based on the first correspondence and the first random access resource. The network device determines, based on the second correspondence and the first detection sequence, the first peak for sending the random access response to the terminal device.

In this way, the network device may determine, based on the first correspondence between a random access resource and a detection sequence, the first detection sequence obtained by the terminal device. Then, the network device determines the first peak based on the correspondence between a detection sequence and a peak, where the terminal device receives, at the first peak, the reference signal sent by the network device. In this way, the network device may send the random access response at the first peak. In this way, the terminal device can also receive the random access response sent by the network device at the first peak. Therefore, a random access success rate can be improved.

Optionally, the first correspondence and the second correspondence may be determined by the network device and sent to the terminal device (for example, sent by using the broadcast message in S210), or may be specified in the protocol. Alternatively, one of the first correspondence and the second correspondence is determined by the network device and sent to the terminal device, and the other one is specified in the protocol. This is not limited in this embodiment of this application.

Manner 2: The network device determines, based on the third correspondence and the first random access resource, the first peak for sending the random access response to the terminal device.

In this way, the network device may determine, based on the third correspondence between a random access resource and a peak, that the terminal device receives the reference signal at the first peak, and can also ensure that the terminal device can receive the random access response sent by the network device at the first peak. Therefore, a random access success rate can be improved.

Optionally, the third correspondence may be determined by the network device and sent to the terminal device, or may be specified in the protocol. This is not limited in this embodiment of this application.

If the grouping information is used by the terminal device to determine the first peak, and the first peak is used by the terminal device to determine the first random access resource, the network device may determine the first peak based on the foregoing fourth correspondence and the first random access resource.

In this way, the network device may determine, based on the fourth correspondence between a random access resource and a peak, that the terminal device receives the reference signal at the first peak, and can also ensure that the terminal device can receive the random access response sent by the network device at the first peak. Therefore, a random access success rate can be improved.

Optionally, the fourth correspondence may be determined by the network device and sent to the terminal device, or may be specified in the protocol. This is not limited in this embodiment of this application.

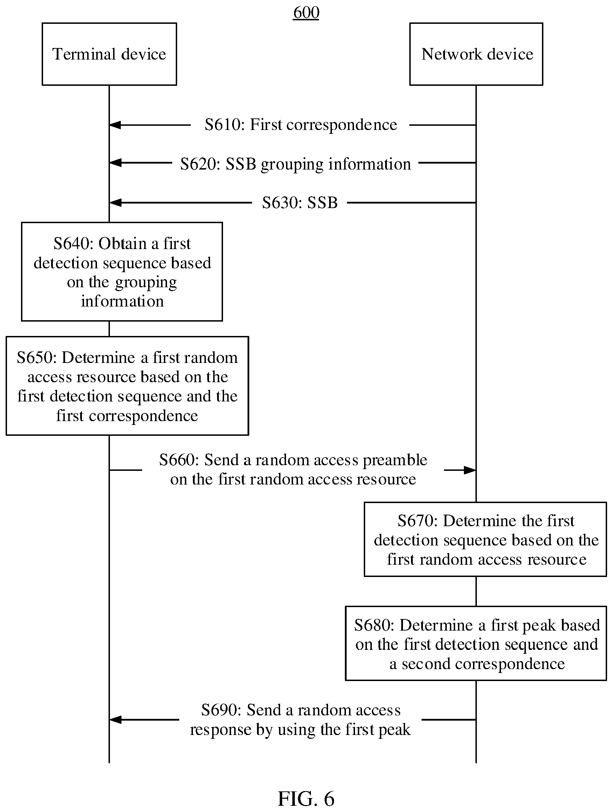

With reference to FIG. 6, a random access method 600 mentioned in an embodiment of this application is described below. In the method 600, an example in which a reference signal is an SSB is used for description. This should not impose any limitation on this embodiment of this application. The method 600 includes the following steps.

S610: A network device sends a first correspondence. For example, the network device may send the first correspondence to one or more terminal devices.

Correspondingly, the terminal device receives the first correspondence sent by the network device.

Specifically, the network device may send the first correspondence to the terminal device in a broadcast/multicast manner or the like.

S620: The network device sends SSB grouping information, where the grouping information is used to indicate that M reference signals form one group, and there are N groups of reference signals in total.

Correspondingly, the terminal device receives the SSB grouping information sent by the network device.

It should be noted that a sequence of S610 and S620 is not limited, and S610 and S620 may be simultaneously performed or may be separately performed. In addition, the network device may send the first correspondence and the SSB grouping information to the terminal device in a same broadcast message, or may send the first correspondence and the SSB grouping information to the terminal device in different broadcast messages. This is not limited in this embodiment of this application.

S630: The network device sends a plurality of SSBs. For example, the network device sends the plurality of SSBs to one or more terminal devices.

Correspondingly, the terminal device performs detection on the SSB.

Optionally, the network device may broadcast or multicast the plurality of SSBs.

S640: If the terminal device detects at least one SSB, the terminal device may determine a first detection sequence based on the SSB grouping information in S620.

Specifically, in S640, for a manner of determining the first detection sequence by the terminal device, refer to the descriptions in the method 500.

S650: The terminal device determines a first random access resource based on the first detection sequence and the first correspondence in S610.

Optionally, the first correspondence is shown in Table 1. The terminal device may determine the first random access resource based on Table 1.

S660: The terminal device sends a random access preamble (preamble) to the network device on the first random access resource.

Correspondingly, the network device receives, on the first random access resource, the random access preamble sent by the terminal device.

S670: The network device determines the first detection sequence based on the first correspondence.

S680: The network device determines a first peak based on the first detection sequence and a second correspondence.

For example, the network device sends four SSBs based on the following matrix. Each row of the matrix represents one SSB, and four rows from top to bottom respectively correspond to an SSB 1, an SSB 2, an SSB 3, and an SSB 4. Each column represents one peak, and there are 15 columns in total corresponding to 15 peaks. There are eight Is in the first row, indicating that the network device sends the SSB 1 at the eight peaks. There are also eight Is in the second row, indicating that the network device sends the SSB 2 at the eight peaks. The rest may be deduced by analogy. An element 0 in the matrix indicates that no SSB is sent at the peak. The corresponding second correspondence is shown in Table 4. A detection sequence in Table 4 is a specific column in the matrix. The third row in Table 4 is used as an example. If a detection sequence determined by the terminal device is 0100, the terminal device may determine that the SSB 2 sent by the network device is received at the 2nd peak. In this case, the first peak is the 2nd peak. Correspondingly, the network device sends a random access response to the terminal device by using the 2nd peak.

$$
\begin{Bmatrix}
1 & 0 & 0 & 0 & 1 & 0 & 0 & 1 & 1 & 0 & 1 & 0 & 1 & 1 & 1 \\
0 & 1 & 0 & 0 & 1 & 1 & 0 & 1 & 0 & 1 & 1 & 1 & 1 & 0 & 0 \\
0 & 0 & 1 & 0 & 0 & 1 & 1 & 0 & 1 & 0 & 1 & 1 & 1 & 1 & 0 \\
0 & 0 & 0 & 1 & 1 & 0 & 1 & 1 & 0 & 1 & 0 & 1 & 1 & 1 & 1
\end{Bmatrix}
$$

Table 4

| Detection sequence | Peak |
|---|---|
| 0000 | 000000000000000 |
| 1000 | 100000000000000 |
| 0100 | 010000000000000 |
| 0010 | 001000000000000 |
| 0001 | 000100000000000 |
| 1101 | 000010000000000 |
| 0110 | 000001000000000 |
| 0011 | 000000100000000 |
| 1101 | 000000010000000 |
| 1010 | 000000001000000 |
| 0101 | 000000000100000 |
| 1110 | 000000000010000 |
| 0111 | 000000000001000 |
| 1111 | 000000000000100 |
| 1011 | 000000000000010 |
| 1001 | 000000000000001 |

Optionally, before S610, the network device may determine the first correspondence. Optionally, the network device may determine the first correspondence based on a correspondence between a beam and a random access resource. With reference to the foregoing example, it is assumed that resource configuration information broadcast by the network device indicates that there are a total of 32 random access preambles (where a random access resource may include a random access preamble) on one random access occasion (RACH occasion, RO), and there are four beams in total (where each beam corresponds to eight random access preambles), where each beam has eight peaks (this is an example, and a quantity of peaks of each beam may be different). In this case, each peak corresponds to one ((32/4)/8) random access preamble. For example, the SSB 1, the SSB 2, the SSB 3, and the SSB 4 are respectively sent on the four beams. Originally, the SSB 1 sent on a beam 1 corresponds to a random access preamble 1, a random access preamble 2, ..., and a random access preamble 8. However, because the SSB 1 corresponds to eight peaks, with reference to Table 4 and the foregoing matrix, the eight peaks corresponding to the SSB 1 include the $1^{st}$ peak, the $5^{th}$ peak, the $8^{th}$ peak, the $9^{th}$ peak, the $11^{th}$ peak, the $13^{th}$ peak, the $14^{th}$ peak, and the $15^{th}$ peak. In this case, the random access preamble 1 is allocated to the $1^{st}$ peak of the SSB 1 (correspondingly, the sequence 1000 corresponds to the random access preamble 1); the random access preamble 2 is allocated to the $5^{th}$ peak of the SSB 1 (correspondingly, the sequence 1100 corresponds to the random access preamble 2); the random access preamble 3 is allocated to the $8^{th}$ peak of the SSB 1 (correspondingly, the sequence 1101 corresponds to the random access preamble 2); the random access preamble 4 is allocated to the $9^{th}$ peak of the SSB 1 (correspondingly, the sequence 1010 corresponds to the random access preamble 4); the random access preamble 5 is allocated to the $11^{th}$ peak of the SSB 1 (correspondingly, the sequence 1110 corresponds to the random access preamble 5); the random access preamble 6 is allocated to the $13^{th}$ peak of the SSB 1 (correspondingly, the sequence 1111 corresponds to the random access preamble 6); the random access preamble 7 is allocated to the $14^{th}$ peak of the SSB 1 (correspondingly, the sequence 1011 corresponds to the random access preamble 7); the random access preamble 8 is allocated to the $15^{th}$ peak of the SSB 1 (correspondingly, the sequence 1001 corresponds to the random access preamble 8). In this way, the first correspondence is shown in Table 5.

**Table 5**

| Detection sequence | Random access resource |
|---|---|
| 1000 | Random access preamble 1 |
| 1100 | Random access preamble 2 |
| 1101 | Random access preamble 3 |
| 1010 | Random access preamble 4 |
| 1110 | Random access preamble 5 |
| 1111 | Random access preamble 6 |
| 1011 | Random access preamble 7 |
| 1001 | Random access preamble 8 |

S690: The network device sends the random access response to the terminal device by using the first peak.

Correspondingly, the terminal device receives the random access response sent by the network device by using the first peak.

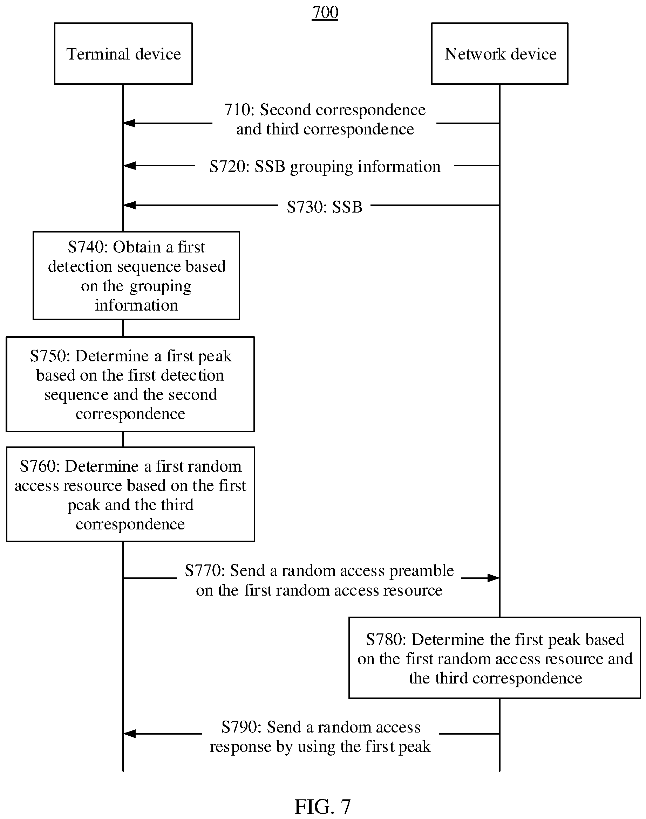

With reference to FIG. 7, a random access method 700 mentioned in an embodiment of this application is described below. In the method 700, an example in which a reference signal is an SSB is used for description. This should not impose any limitation on this embodiment of this application. The method 700 includes the following steps.

S710: A network device sends a second correspondence and a third correspondence. For example, the network device may send the second correspondence and the third correspondence to one or more terminal devices.

Correspondingly, the terminal device receives the second correspondence and the third correspondence sent by the network device.

Specifically, the network device may send the second correspondence and the third correspondence to the terminal device in a broadcast/multicast manner or the like.

Certainly, in S710, the network device may send the second correspondence and the third correspondence in one broadcast message or multicast message, or may send the second correspondence and the third correspondence in different broadcast messages and different multicast messages.

S720: The network device sends SSB grouping information, where the grouping information is used to indicate that M reference signals form one group, and there are N groups of reference signals in total.

Correspondingly, the terminal device receives the SSB grouping information sent by the network device.

It should be noted that a sequence of S710 and S720 is not limited, and S710 and S720 may be simultaneously performed or may be separately performed. In addition, the network device may send the second correspondence, the third correspondence, and the SSB grouping information to the terminal device in a same broadcast message, or may send the second correspondence, the third correspondence, and the SSB grouping information to the terminal device in different broadcast messages. This is not limited in this embodiment of this application.

S730: The network device sends a plurality of SSBs. For example, the network device sends the plurality of SSBs to one or more terminal devices.

Correspondingly, the terminal device performs detection on the SSB.

Optionally, the network device may broadcast or multicast the plurality of SSBs.

S740: If the terminal device detects at least one SSB, the terminal device may determine a first detection sequence based on the SSB grouping information in S620.

Specifically, in S740, for a manner of determining the first detection sequence by the terminal device, refer to the descriptions in the method 500.

S750: The terminal device determines a first peak and a random access resource based on the first detection sequence and the second correspondence in S710.

Optionally, the second correspondence is shown in Table 2 or Table 4. The terminal device may determine the first random access resource based on Table 2 or Table 4.

S760: The terminal device determines a first random access resource based on the third correspondence and the first peak.

With reference to the example in the method 600, the third correspondence may be shown in Table 6.

**Table 6**

| Peak | Random access resource |
| --- | --- |
| 1st peak | Random access preamble 1 |
| 5th peak | Random access preamble 2 |
| 8th peak | Random access preamble 3 |
| 9th peak | Random access preamble 4 |
| 11th peak | Random access preamble 5 |
| 13th peak | Random access preamble 6 |
| 14th peak | Random access preamble 7 |
| 15th peak | Random access preamble 8 |

S770: The terminal device sends a random access preamble (preamble) to the network device on the first random access resource.

Correspondingly, the network device receives, on the first random access resource, the random access preamble sent by the terminal device.

S780: The network device determines the first peak based on the first random access resource and the third correspondence.

S790: The network device sends a random access response to the terminal device by using the first peak.

Correspondingly, the terminal device receives the random access response sent by the network device by using the first peak.

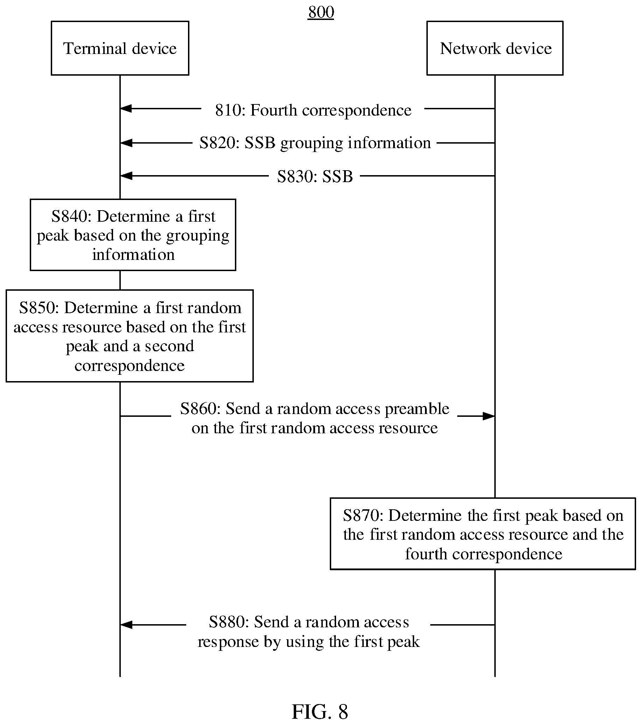

With reference to FIG. 8, a random access method 800 mentioned in an embodiment of this application is described below. In the method 800, an example in which a reference signal is an SSB is used for description. This should not impose any limitation on this embodiment of this application. The method 800 includes the following steps.

S810: A network device sends a fourth correspondence. For example, the network device may send the fourth correspondence to one or more terminal devices.

Correspondingly, the terminal device receives the fourth correspondence sent by the network device.

Specifically, the network device may send the fourth correspondence to the terminal device in a broadcast/multicast manner or the like.

Optionally, before S810, the method 800 further includes: The network device may determine the fourth correspondence. Optionally, the network device may determine the fourth correspondence based on a correspondence between a beam and a random access resource. With reference to the example in the method 600, it is assumed that resource configuration information broadcast by the network device indicates that there are a total of 32 random access preambles (where a random access resource may include a random access preamble) on one RO, and there are four beams in total (where each beam corresponds to eight random access preambles), where each beam has eight peaks (this is an example, and a quantity of peaks of each beam may be different). In this case, each peak corresponds to one ((32/4)/8) random access preamble. For example, the SSB 1, the SSB 2, the SSB 3, and the SSB 4 are respectively sent on the four beams. Originally, the SSB 1 sent on a beam 1 corresponds to a random access preamble 1, a random access preamble 2, ..., and a random access preamble 8. However, because the SSB 1 corresponds to eight peaks, the eight peaks corresponding to the SSB 1, including the $1^{st}$ peak, the $5^{th}$ peak, the $8^{th}$ peak, the $9^{th}$ peak, the $11^{th}$ peak, the $13^{th}$ peak, the $14^{th}$ peak, and the $15^{th}$ peak, respectively correspond to the random access preamble 1, the random access preamble 2, ..., and the random access preamble 8. The rest may be deduced by analogy.

S820: The network device sends SSB grouping information, where the grouping information is used to indicate that M reference signals form one group and there are N groups of reference signals in total, and indicate peak information of each group of reference signals.

Correspondingly, the terminal device receives the SSB grouping information sent by the network device.

The example in the method 600 is used as an example for description. The matrix in the method 600 may be peak information of one group of reference signals, and peaks of groups of reference signals may be the same or different. To be specific, if there are 16 groups of reference signals, peak information of each group of reference signals may be shown as the matrix in the method 600, or peak information of one group of reference signals may be shown as the matrix in the method 600.

It should be noted that a sequence of S810 and S820 is not limited, and S810 and S820 may be simultaneously performed or may be separately performed. In addition, the network device may send the fourth correspondence and the SSB grouping information to the terminal device in a same broadcast message, or may send the fourth correspondence and the SSB grouping information to the terminal device in different broadcast messages. This is not limited in this embodiment of this application.

S830: The network device sends a plurality of SSBs. For example, the network device sends the plurality of SSBs to one or more terminal devices.

Correspondingly, the terminal device performs detection on the SSB.

Optionally, the network device may broadcast or multicast the plurality of SSBs.

S840: If the terminal device detects at least one SSB, the terminal device may determine a first peak based on the SSB grouping information in S820.

Specifically, in S840, for a manner of determining the first peak by the terminal device, refer to the algorithm described in the method 500.

S850: The terminal device determines a first random access resource based on the first peak and the fourth correspondence in S810.

Optionally, the fourth correspondence is shown in Table 3. The terminal device may determine the first random access resource based on Table 3.

S860: The terminal device sends a random access preamble (preamble) to the network device on the first random access resource.

Correspondingly, the network device receives, on the first random access resource, the random access preamble sent by the terminal device.

S870: The network device determines the first peak based on the first random access resource and the fourth correspondence.

S880: The network device sends a random access response to the terminal device by using the first peak.

Correspondingly, the terminal device receives the random access response sent by the network device by using the first peak.

It should be noted that, in this embodiment of this application, for ease of description, a resource used to send the random access preamble is defined as the first random access resource, and the determined peak used by the network device to send the reference signal and the determined peak used to send the random access response each are defined as the first peak. In different embodiments, values of the first random access resource and the first peak may be different. This is not limited in this application.

The embodiments described in this specification may be independent solutions, or may be combined based on internal logic. These solutions all fall within the protection scope of this application.

It may be understood that, the methods and the operations implemented by the terminal device in the foregoing method embodiments may alternatively be implemented by a component (for example, a chip or a circuit) that may be used in the terminal device, and the methods and the operations implemented by the network device in the foregoing method embodiments may alternatively be implemented by a component (for example, a chip or a circuit) that may be used in the network device.

The foregoing describes the method embodiments provided in this application, and the following describes apparatus embodiments provided in this application. It should be understood that descriptions of the apparatus embodiments correspond to the descriptions of the method embodiments. Therefore, for content not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element, such as a transmit-end device or a receive-end device, includes a corresponding hardware structure and/or software module for performing each function. A person skilled in the art may be aware that, with reference to units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the protection scope of this application.

In embodiments of this application, function modules of the transmit-end device or the receive-end device may be obtained through division based on the foregoing method examples. For example, each function module may be obtained through division based on a corresponding function, or two or more functions may be integrated into one processing module. The integrated module may be implemented in a form of hardware, or may be implemented in a form of a software function module. It should be noted that, in embodiments of this application, division into the modules is an example, and is merely logical function division. During actual implementation, another available division manner may be used. The following descriptions are provided by using an example in which each function module is obtained through division based on a corresponding function.

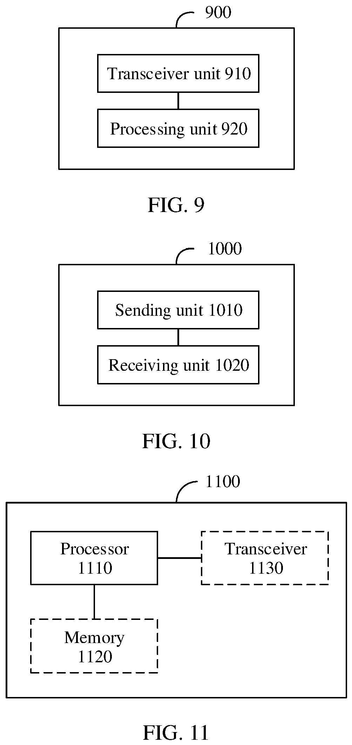

FIG. 9 is a schematic block diagram of a random access apparatus 900 according to an embodiment of this application. The communication apparatus 900 includes a transceiver unit 910 and a processing unit 920. The transceiver unit 910 may communicate with the outside, and the processing unit 910 is configured to process data. The transceiver unit 910 may also be referred to as a communication interface or a communication unit.

The apparatus 900 may be configured to perform an action performed by the terminal device in the foregoing method embodiments. In this case, the communication apparatus 900 may be referred to as a terminal device. The transceiver unit 910 is configured to perform receiving/sending-related operations on a terminal device side in the foregoing method embodiments. The processing unit 920 is configured to perform processing-related operations on the terminal device side in the foregoing method embodiments.

The transceiver unit 910 is configured to obtain reference signal grouping information, where the grouping information is used to indicate a reference signal grouping status. The processing unit 920 is configured to: if the transceiver unit detects at least one reference signal sent by a network device, determine, based on the grouping information, a first random access resource for sending a random access preamble. The transceiver unit 910 is further configured to send the random access preamble to the network device on the first random access resource.

In an optional embodiment, the processing unit 920 is specifically configured to: determine a first detection sequence based on the grouping information, and determine the first random access resource based on the first detection sequence.

In an optional embodiment, the processing unit 920 is specifically configured to:
determine, based on the first detection sequence and a first correspondence, the first random access resource for sending the random access preamble, where the first correspondence is used to indicate that at least one detection sequence corresponds to at least one random access resource, the at least one detection sequence includes the first detection sequence, and the at least one random access resource includes the first random access resource.

In an optional embodiment, the transceiver unit 910 is further configured to obtain the first correspondence from the network device.

In an optional embodiment, the processing unit 920 is specifically configured to: determine, based on the first detection sequence and a second correspondence, a first peak at which the network device sends the at least one reference signal, where the second correspondence is used to indicate that at least one detection sequence corresponds to at least one peak, the at least one detection sequence includes the first detection sequence, and the at least one peak includes the first peak; and
determine, based on the first peak and a third correspondence, the first random access resource for sending the random access preamble, where the third correspondence is used to indicate that the at least one peak corresponds to at least one random access resource, and the at least one random access resource includes the first random access resource.

In an optional embodiment, the transceiver unit 910 is further configured to obtain the second correspondence and the third correspondence from the network device.

In an optional embodiment, the processing unit 920 is specifically configured to obtain the first detection sequence based on the grouping information and an index of the at least one reference signal.

In an optional embodiment, the grouping information is further used to indicate peak information for sending each group of reference signals, and the processing unit 920 is specifically configured to: determine a first peak based on the grouping information, and determine, based on the first peak and a fourth correspondence, the first random access resource for sending the random access preamble, where the fourth correspondence is used to indicate that at least one peak corresponds to at least one random access resource, the at least one peak includes the first peak, and the at least one random access resource includes the first random access resource.

In an optional embodiment, the transceiver unit 910 is further configured to obtain a reference signal received power RSRP threshold from the network device.

The processing unit 920 is further configured to: if an RSRP of the at least one reference signal is greater than the RSRP threshold, determine that the at least one reference signal is detected.

In an optional embodiment, the transceiver unit 920 is specifically configured to obtain the reference signal grouping information from the network device.

The processing unit 920 in the foregoing embodiment may be implemented by using a processor or a processor-related circuit. The transceiver unit 910 may be implemented by using a transceiver or a transceiver-related circuit. The transceiver unit 910 may also be referred to as a communication unit or a communication interface.

FIG. 10 is a schematic block diagram of a random access apparatus 1000 according to an embodiment of this application. The communication apparatus 1000 includes a sending unit 1010 and a receiving unit 1020. The sending unit 1010 and the receiving unit 1020 may communicate with the outside. The sending unit 1010 and the receiving unit 1020 may also be referred to as a communication interface or a communication unit. Optionally, the apparatus 1000 further includes a processing unit 1030, and the processing unit 1030 is configured to perform data processing.

The apparatus 1000 may be configured to perform an action performed by the network device in the foregoing method embodiments. In this case, the communication apparatus 1000 may be referred to as a network device. The sending unit 1010 is configured to perform sending-related operations on a network device side in the foregoing method embodiments. The receiving unit 1020 is configured to perform receiving-related operations on the network device side in the foregoing method embodiments. The processing unit 1030 is configured to perform processing-related operations on the network device side in the foregoing method embodiments.

The sending unit 1010 is configured to send reference signal grouping information to a terminal device, where the grouping information is used for a reference signal grouping status, and the grouping information is used by the terminal device to determine a first random access resource.

The sending unit 1010 is further configured to send a reference signal to the terminal device.

The receiving unit 1020 is configured to receive a random access preamble from the terminal device on the first random access resource.

In an optional embodiment, the processing unit 1030 is configured to determine, based on the first random access resource, a first peak for sending a random access response to the terminal device.

The sending unit 1010 is further configured to send the random access response to the terminal device by using the first peak.

In an optional embodiment, the grouping information is specifically used by the terminal device to determine a first detection sequence, where the first detection sequence is used by the terminal device to determine the first random access resource.

In an optional embodiment, the processing unit 1030 is specifically configured to: determine the first detection sequence based on a first correspondence and the first random access resource, where the first correspondence is used to indicate that at least one detection sequence corresponds to at least one random access resource, the at least one detection sequence includes the first detection sequence, and the at least one random access resource includes the first random access resource; and

determine, based on a second correspondence and the first detection sequence, the first peak for sending the random access response to the terminal device, where the second correspondence is used to indicate that the at least one detection sequence corresponds to at least one peak, the at least one detection sequence includes the first detection sequence, and the at least one peak includes the first peak.

In an optional embodiment, the sending unit 1010 is further configured to send the first correspondence and the second correspondence to the terminal device.

In an optional embodiment, the processing unit 1030 is specifically configured to: determine, based on a third correspondence and the first random access resource, the first peak for sending the random access response to the terminal device, where the third correspondence is used to indicate that at least one peak corresponds to at least one random access resource, and the at least one random access resource includes the first random access resource.

In an optional embodiment, the sending unit 1010 is further configured to send the third correspondence to the terminal device.

In an optional embodiment, the grouping information is further used to indicate peak information of each group of reference signals, where the grouping information is specifically used by the terminal device to determine the first peak, and the first peak is used by the terminal device to determine the first random access resource.

The processing unit 1030 is specially configured to determine, based on the first random access resource and a fourth correspondence, the first peak for sending the random access response to the terminal device, where the fourth correspondence is used to indicate that at least one peak corresponds to at least one random access resource, the at least one peak includes the first peak, and the at least one random access resource includes the first random access resource.

In an optional embodiment, the sending unit 1010 is further configured to send a reference signal received power RSRP threshold to the terminal device.

As shown in FIG. 11, an embodiment of this application further provides a communication apparatus 1100. The communication apparatus 1100 includes a processor 1110, the processor 1110 is coupled to a memory 1120, the memory 1120 is configured to store a computer program or instructions, and the processor 1110 is configured to execute the computer program or the instructions stored in the memory 1120, so that the method in the foregoing method embodiments is performed.

Optionally, as shown in FIG. 11, the communication apparatus 1100 may further include the memory 1120.

Optionally, as shown in FIG. 11, the communication apparatus 1100 may further include a transceiver 1130. The transceiver 1130 is configured to receive and/or send a signal. For example, the processor 1110 is configured to control the transceiver 1130 to receive and/or send a signal.

In a solution, the communication apparatus 1100 is configured to implement operations performed by the terminal device in the foregoing method embodiments.

For example, the processor 1110 is configured to implement processing-related operations performed by the terminal device in the foregoing method embodiments, and the transceiver 1130 is configured to implement receiving/sending-related operations performed by the terminal device in the foregoing method embodiments.

In another solution, the communication apparatus 1100 is configured to implement operations performed by the network device in the foregoing method embodiments.

For example, the processor 1110 is configured to implement processing-related operations performed by the network device in the foregoing method embodiments, and the transceiver 1130 is configured to implement receiving/sending-related operations performed by the network device in the foregoing method embodiments.

An embodiment of this application further provides a communication apparatus 1200. The communication apparatus 1200 may be a terminal device or a chip. The communication apparatus 1200 may be configured to perform operations performed by the terminal device in the foregoing method embodiments.

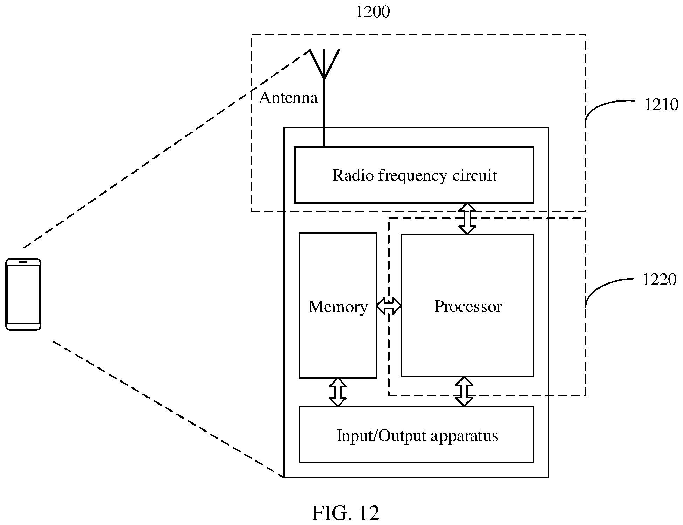

When the communication apparatus 1200 is the terminal device, FIG. 12 is a simplified schematic diagram of a structure of the terminal device. For ease of understanding and illustration, an example in which the terminal device is a mobile phone is used in FIG. 12. As shown in FIG. 12, the terminal device includes a processor, a memory, a radio frequency circuit, an antenna, and an input/output apparatus. The processor is mainly configured to process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process a radio frequency signal. The antenna is mainly configured to send or receive a radio frequency signal in a form of an electromagnetic wave. The input/output apparatus, for example, a touchscreen, a display, or a keyboard, is mainly configured to: receive data entered by a user, and output data to the user. It should be noted that some types of terminal devices may not have an input/output apparatus.

When data needs to be sent, the processor performs baseband processing on the to-be-sent data, and outputs a baseband signal to the radio frequency circuit. The radio frequency circuit performs radio frequency processing on the baseband signal, and sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independently from the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device.

As shown in FIG. 12, the terminal device includes a transceiver unit 1210 and a processing unit 1220. The transceiver unit 1210 may also be referred to as a transceiver, a transceiver machine, a transceiver apparatus, or the like. The processing unit 1220 may also be referred to as a processor, a processing board, a processing module, a processing apparatus, or the like.

Optionally, a component for implementing a receiving function in the transceiver unit 1210 may be considered as a receiving unit, and a component for implementing a sending function in the transceiver unit 1210 may be considered as a sending unit. That is, the transceiver unit 1210 includes the receiving unit and the sending unit. Sometimes, the transceiver unit may also be referred to as a transceiver machine, a transceiver, a transceiver circuit, or the like. Sometimes, the receiving unit may also be referred to as a receiver machine, a receiver, a receiving circuit, or the like. Sometimes, the sending unit may also be referred to as a transmitter machine, a transmitter, a transmitting circuit, or the like.

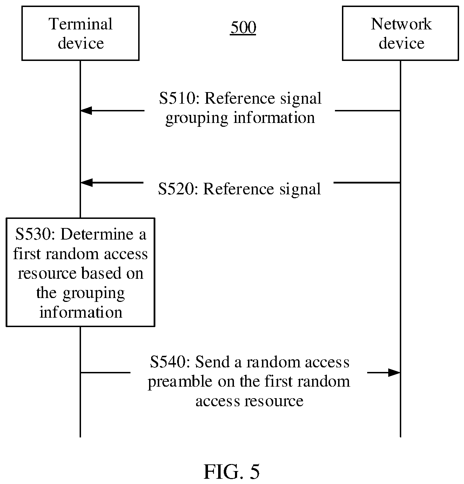

For example, in an implementation, the transceiver unit 1210 is configured to perform the receiving operations in S510, S520, and S540 in FIG. 5, and/or the transceiver unit 1210 is further configured to perform another receiving/sending-related step performed by the terminal device. For example, the transceiver unit 1210 is further configured to receive at least one of a first correspondence, a second correspondence, a third correspondence, a fourth correspondence, and an RSRP threshold. The processing unit 1220 is configured to perform another processing-related step performed by the terminal device in embodiments of this application. For example, the processing unit 1220 is configured to parse reference signal resource configuration information received by the transceiver unit 1210, to obtain a reference signal resource.

It should be understood that FIG. 12 is merely an example instead of a limitation. The terminal device including the transceiver unit and the processing unit may not depend on the structure shown in FIG. 12.

When the communication apparatus 1200 is the chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 1300. The communication apparatus 1300 may be a network device or a chip. The communication apparatus 1300 may be configured to perform operations performed by the network device in the foregoing method embodiments.

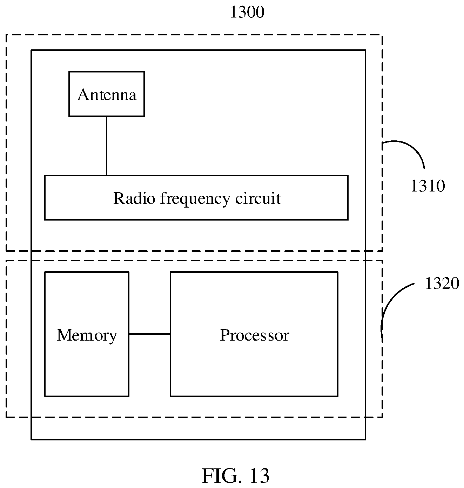

When the communication apparatus 1300 is a network device, for example, a base station, FIG. 13 is a simplified schematic diagram of a structure of the base station. The base station includes a part 1310 and a part 1320. The part 1310 is mainly configured to send and receive a radio frequency signal and perform conversion between the radio frequency signal and a baseband signal. The part 1320 is mainly configured to perform baseband processing, control the network device, and the like. The part 1310 may be usually referred to as a transceiver unit, a transceiver machine, a transceiver circuit, a transceiver, or the like. The part 1320 is usually a control center of the network device, may be usually referred to as a processing unit, and is configured to control the base station to perform a processing operation on a network device side in the foregoing method embodiments.

The transceiver unit in the part 1310 may also be referred to as a transceiver machine, a transceiver, or the like. The transceiver unit includes an antenna and a radio frequency circuit. The radio frequency circuit is mainly configured to perform radio frequency processing. Optionally, a component for implementing a receiving function in the part 1310 may be considered as a receiving unit, and a component for implementing a sending function may be considered as a sending unit. That is, the part 1310 includes the receiving unit and the sending unit. The receiving unit may also be referred to as a receiver machine, a receiver, a receiving circuit, or the like. The sending unit may be referred to as a transmitter machine, a transmitter, a transmitting circuit, or the like.

The part 1320 may include one or more boards, and each board may include one or more processors and one or more memories. The processor is configured to read and execute a program in a memory to implement a baseband processing function and control the base station. If there are a plurality of boards, the boards may be interconnected with each other to enhance a processing capability. In an optional implementation, the plurality of boards may share one or more processors, or the plurality of boards may share one or more memories, or the plurality of boards may simultaneously share one or more processors.

For example, in an implementation, the transceiver unit in part 1310 is configured to perform the sending operations in S510, S520, and S540 in FIG. 5, and/or the transceiver unit in part 1310 is further configured to perform another receiving/sending-related step performed by the network device in embodiments of this application. For example, the part 1310 is further configured to send at least one of a first correspondence, a second correspondence, a third correspondence, a fourth correspondence, an RSRP threshold, and a random access response. The part 1320 is configured to perform steps S670 and S680 in FIG. 6, or is configured to perform S780 in FIG. 7, or is configured to perform S870 in FIG. 8, and/or the part 1320 is further configured to perform processing-related steps performed by the network device in embodiments of this application.

It should be understood that FIG. 13 is merely an example instead of a limitation. The network device including the transceiver unit and the processing unit may not depend on the structure shown in FIG. 13.

When the communication apparatus 1300 is the chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a communication system, including the network device and the terminal device in the foregoing embodiments.

An embodiment of this application further provides a computer-readable storage medium. The computer-readable storage medium stores computer instructions used to implement the method performed by the terminal device or the method performed by the network device in the foregoing method embodiments.

For example, when a computer program is executed by a computer, the computer is enabled to implement the method performed by the terminal device or the method performed by the network device in the foregoing method embodiments.

An embodiment of this application further provides a computer program product including instructions. When the instructions are executed by a computer, the computer is enabled to implement the method performed by the terminal device or the method performed by the network device in the foregoing method embodiments.

For explanations and beneficial effects of related content in any of the foregoing provided communication apparatuses, refer to corresponding method embodiments provided above, and details are not described herein again.

In embodiments of this application, the terminal device or the network device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (which is also referred to as a main memory). An operating system of the operating system layer may be any one or more of computer operating systems implementing service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by a terminal device or a network device, or may be performed by a function module that is in the terminal device or the network device and that can invoke and execute a program.

Aspects or features of this application may be implemented as a method, an apparatus, or a product that uses standard programming and/or engineering technologies. The term "product" used in this specification may cover a computer program that can be accessed from any computer-readable component, carrier, or medium. For example, a computer-readable medium may include but is not limited to: a magnetic storage device (for example, a hard disk drive, a floppy disk, or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key drive).

Various storage media described in this specification may indicate one or more devices and/or other machine-readable media that are configured to store information. The term "machine-readable media" may include but is not limited to a radio channel, and various other media that can store, contain, and/or carry instructions and/or data.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should also be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but not limited to, these memories and any memory of another proper type.

A person of ordinary skill in the art may be aware that, in combination with the examples described in the embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, function units in embodiments of this application may be integrated into one unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or a part of the technical solutions may be implemented in a form of a computer software product. The computer software product is stored in a storage medium, and the computer software product includes several instructions. The instructions are used to instructing a computer device (which may be a personal computer, a server, a network device, or the like) to perform all or some of the steps of the methods described in embodiments of this application. The foregoing storage medium may include but is not limited to any medium that can store program code, such as a USB flash drive, a removable hard disk, a read-only memory (read-only memory, ROM), a random access memory (random access memory, RAM), a magnetic disk, or an optical disc.

Unless otherwise defined, all technical and scientific terms used in this specification have same meanings as that usually understood by a person skilled in the art of this application. The terms used in the specification of this application are merely for the purpose of describing specific embodiments, and are not intended to limit this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A random access method, comprising:

   obtaining, by a terminal device, reference signal grouping information, wherein the grouping information is used to indicate a reference signal grouping status;
   if the terminal device detects at least one reference signal sent by a network device, determining, by the terminal device based on the grouping information, a first random access resource for sending a random access preamble; and
   sending, by the terminal device, the random access preamble to the network device on the first random access resource.

2. The method according to claim 1, wherein the determining, by the terminal device based on the grouping information, a first random access resource for sending a random access preamble comprises:

   determining, by the terminal device, a first detection sequence based on the grouping information; and

determining, by the terminal device, the first random access resource based on the first detection sequence.

3. The method according to claim 2, wherein the determining, by the terminal device, the first random access resource based on the first detection sequence comprises:
determining, by the terminal device based on the first detection sequence and a first correspondence, the first random access resource for sending the random access preamble, wherein the first correspondence is used to indicate that at least one detection sequence corresponds to at least one random access resource, the at least one detection sequence comprises the first detection sequence, and the at least one random access resource comprises the first random access resource.

4. The method according to claim 3, wherein the method further comprises:
obtaining, by the terminal device, the first correspondence from the network device.

5. The method according to claim 2, wherein the determining, by the terminal device, the first random access resource based on the first detection sequence comprises:

determining, by the terminal device based on the first detection sequence and a second correspondence, a first peak at which the network device sends the at least one reference signal, wherein the second correspondence is used to indicate that at least one detection sequence corresponds to at least one peak, the at least one detection sequence comprises the first detection sequence, and the at least one peak comprises the first peak; and
determining, by the terminal device based on the first peak and a third correspondence, the first random access resource for sending the random access preamble, wherein the third correspondence is used to indicate that the at least one peak corresponds to at least one random access resource, and the at least one random access resource comprises the first random access resource.

6. The method according to claim 5, wherein the method further comprises:
obtaining, by the terminal device, the second correspondence and the third correspondence from the network device.

7. The method according to any one of claims 2 to 6, wherein the determining, by the terminal device, a first detection sequence based on the grouping information comprises:
obtaining the first detection sequence based on the grouping information and an index of the at least one reference signal.

8. The method according to claim 1, wherein the grouping information is further used to indicate peak information for sending each group of reference signals, wherein
the determining, by the terminal device based on the grouping information, a first random access resource for sending a random access preamble comprises:

determining, by the terminal device, a first peak based on the grouping information; and
determining, by the terminal device based on the first peak and a fourth correspondence, the first random access resource for sending the random access preamble, wherein the fourth correspondence is used to indicate that at least one peak corresponds to at least one random access resource, the at least one peak comprises the first peak, and the at least one random access resource comprises the first random access resource.

9. The method according to any one of claims 1 to 8, wherein the method further comprises:

obtaining, by the terminal device, a reference signal received power RSRP threshold from the network device; and
the method further comprises:
if an RSRP of the at least one reference signal is greater than the RSRP threshold, determining, by the terminal device, that the at least one reference signal is detected.

10. The method according to any one of claims 1 to 9, wherein the obtaining, by a terminal device, reference signal grouping information comprises:
obtaining, by the terminal device, the reference signal grouping information from the network device.

11. A random access method, comprising:

sending, by a network device, reference signal grouping information to a terminal device, wherein the grouping information is used for a reference signal grouping status, and the grouping information is used by the terminal device to determine a first random access resource;

sending, by the network device, a reference signal to the terminal device; and

receiving, by the network device, a random access preamble from the terminal device on the first random access resource.

12. The method according to claim 11, wherein the method further comprises:

determining, by the network device based on the first random access resource, a first peak for sending a random access response to the terminal device; and

sending, by the network device, the random access response to the terminal device by using the first peak.

13. The method according to claim 12, wherein the grouping information is specifically used by the terminal device to determine a first detection sequence, and the first detection sequence is used by the terminal device to determine the first random access resource.

14. The method according to claim 13, wherein the determining, by the network device based on the first random access resource, a first peak for sending a random access response to the terminal device comprises:

determining, by the network device, the first detection sequence based on a first correspondence and the first random access resource, wherein the first correspondence is used to indicate that at least one detection sequence corresponds to at least one random access resource, the at least one detection sequence comprises the first detection sequence, and the at least one random access resource comprises the first random access resource; and

determining, by the network device based on a second correspondence and the first detection sequence, the first peak for sending the random access response to the terminal device, wherein the second correspondence is used to indicate that the at least one detection sequence corresponds to at least one peak, the at least one detection sequence comprises the first detection sequence, and the at least one peak comprises the first peak.

15. The method according to claim 14, wherein the method further comprises:
sending, by the network device, the first correspondence and the second correspondence to the terminal device.

16. The method according to claim 12 or 13, wherein the determining, by the network device based on the first random access resource, a first peak for sending a random access response to the terminal device comprises:
determining, by the network device based on a third correspondence and the first random access resource, the first peak for sending the random access response to the terminal device, wherein the third correspondence is used to indicate that at least one peak corresponds to at least one random access resource, the at least one random access resource comprises the first random access resource, and the at least one peak comprises the first peak.

17. The method according to claim 16, wherein the method further comprises:
sending, by the network device, the third correspondence to the terminal device.

18. The method according to claim 12, wherein the grouping information is further used to indicate peak information of each group of reference signals, wherein
the determining, by the network device based on the first random access resource, a first peak for sending a random access response to the terminal device comprises:
determining, by the network device based on the first random access resource and a fourth correspondence, the first peak for sending the random access response to the terminal device, wherein the fourth correspondence is used to indicate that at least one peak corresponds to at least one random access resource, the at least one peak comprises the first peak, and the at least one random access resource comprises the first random access resource.

19. The method according to any one of claims 11 to 18, wherein the method further comprises:
sending, by the network device, a reference signal received power RSRP threshold to the terminal device.

20. A random access apparatus, comprising:

a transceiver unit, configured to obtain reference signal grouping information, wherein the grouping information is used to indicate a reference signal grouping status; and

a processing unit, configured to: if the transceiver unit detects at least one reference signal sent by a network device, determine, based on the grouping information, a first random access resource for sending a random access preamble, wherein

the transceiver unit is further configured to send the random access preamble to the network device on the first random access resource.

21. The apparatus according to claim 20, wherein the processing unit is specifically configured to:

   determine a first detection sequence based on the grouping information; and
   determine the first random access resource based on the first detection sequence.

22. The apparatus according to claim 21, wherein the processing unit is specifically configured to:
   determine, based on the first detection sequence and a first correspondence, the first random access resource for sending the random access preamble, wherein the first correspondence is used to indicate that at least one detection sequence corresponds to at least one random access resource, the at least one detection sequence comprises the first detection sequence, and the at least one random access resource comprises the first random access resource.

23. The apparatus according to claim 22, wherein the transceiver unit is further configured to:
   obtain the first correspondence from the network device.

24. The apparatus according to claim 21, wherein the processing unit is specifically configured to:

   determine, based on the first detection sequence and a second correspondence, a first peak at which the network device sends the at least one reference signal, wherein the second correspondence is used to indicate that at least one detection sequence corresponds to at least one peak, the at least one detection sequence comprises the first detection sequence, and the at least one peak comprises the first peak; and
   determine, based on the first peak and a third correspondence, the first random access resource for sending the random access preamble, wherein the third correspondence is used to indicate that the at least one peak corresponds to at least one random access resource, and the at least one random access resource comprises the first random access resource.

25. The apparatus according to claim 24, wherein the transceiver unit is further configured to:
   obtain the second correspondence and the third correspondence from the network device.

26. The apparatus according to any one of claims 21 to 25, wherein the processing unit is specifically configured to:
   obtain the first detection sequence based on the grouping information and an index of the at least one reference signal.

27. The apparatus according to claim 20, wherein the grouping information is further used to indicate peak information for sending each group of reference signals, wherein
   the processing unit is specifically configured to:

   determine a first peak based on the grouping information; and
   determine, based on the first peak and a fourth correspondence, the first random access resource for sending the random access preamble, wherein the fourth correspondence is used to indicate that at least one peak corresponds to at least one random access resource, the at least one peak comprises the first peak, and the at least one random access resource comprises the first random access resource.

28. The apparatus according to any one of claims 20 to 27, wherein the transceiver unit is further configured to:

   obtain a reference signal received power RSRP threshold from the network device; and
   the processing unit is further configured to: if an RSRP of the at least one reference signal is greater than the RSRP threshold, determine that the at least one reference signal is detected.

29. The apparatus according to any one of claims 20 to 28, wherein the transceiver unit is specifically configured to:
   obtain the reference signal grouping information from the network device.

30. A random access apparatus, comprising:

a sending unit, configured to send reference signal grouping information to a terminal device, wherein the grouping information is used for a reference signal grouping status, and the grouping information is used by the terminal device to determine a first random access resource, wherein

the sending unit is further configured to send a reference signal to the terminal device; and

a receiving unit, configured to receive a random access preamble from the terminal device on the first random access resource.

31. The apparatus according to claim 30, wherein the apparatus further comprises:

a processing unit, configured to determine, based on the first random access resource, a first peak for sending a random access response to the terminal device; and

the sending unit is further configured to send the random access response to the terminal device by using the first peak.

32. The apparatus according to claim 31, wherein the grouping information is specifically used by the terminal device to determine a first detection sequence, and the first detection sequence is used by the terminal device to determine the first random access resource.

33. The apparatus according to claim 32, wherein the processing unit is specifically configured to:

determine the first detection sequence based on a first correspondence and the first random access resource, wherein the first correspondence is used to indicate that at least one detection sequence corresponds to at least one random access resource, the at least one detection sequence comprises the first detection sequence, and the at least one random access resource comprises the first random access resource; and

determine, based on a second correspondence and the first detection sequence, the first peak for sending the random access response to the terminal device, wherein the second correspondence is used to indicate that the at least one detection sequence corresponds to at least one peak, the at least one detection sequence comprises the first detection sequence, and the at least one peak comprises the first peak.

34. The apparatus according to claim 33, wherein the sending unit is further configured to:
send the first correspondence and the second correspondence to the terminal device.

35. The apparatus according to claim 31 or 32, wherein the processing unit is specifically configured to:
determine, based on a third correspondence and the first random access resource, the first peak for sending the random access response to the terminal device, wherein the third correspondence is used to indicate that at least one peak corresponds to at least one random access resource, and the at least one random access resource comprises the first random access resource.

36. The apparatus according to claim 35, wherein the sending unit is further configured to:
send the third correspondence to the terminal device.

37. The apparatus according to claim 31, wherein the grouping information is further used to indicate peak information of each group of reference signals, and the grouping information is specifically used by the terminal device to determine the first peak, wherein the first peak is used by the terminal device to determine the first random access resource; and
the processing unit is specifically configured to:
determine, based on the first random access resource and a fourth correspondence, the first peak for sending the random access response to the terminal device, wherein the fourth correspondence is used to indicate that at least one peak corresponds to at least one random access resource, the at least one peak comprises the first peak, and the at least one random access resource comprises the first random access resource.

38. The apparatus according to any one of claims 30 to 37, wherein the sending unit is further configured to:
send a reference signal received power RSRP threshold to the terminal device.

39. A communication apparatus, comprising a processor and a memory, wherein the processor is coupled to the memory, the memory is configured to store a computer program or instructions, and the processor is configured to execute the computer program or the instructions in the memory, to perform the method according to any one of claims 1 to 10.

**40.** A communication apparatus, comprising a processor and a memory, wherein the processor is coupled to the memory, the memory is configured to store a computer program or instructions, and the processor is configured to execute the computer program or the instructions in the memory, to perform the method according to any one of claims 11 to 19.

**41.** A computer-readable storage medium, wherein the computer-readable storage medium stores a program or instructions used to implement the method according to any one of claims 1 to 10.

**42.** A computer-readable storage medium, wherein the computer-readable storage medium stores a program or instructions used to implement the method according to any one of claims 11 to 19.

**43.** A computer program product, comprising a computer program, wherein when the computer program is executed by a computer, the method according to any one of claims 1 to 10 is performed.

**44.** A computer program product, comprising a computer program, wherein when the computer program is executed by a computer, the method according to any one of claims 11 to 19 is performed.

FIG. 1

200

FIG. 2

Multi-peak beam

Network
device

Terminal
device

FIG. 3

Peak

Beam

FIG. 4

| Terminal device | 500 | Network device |
|---|---|---|

S510: Reference signal grouping information

S520: Reference signal

S530: Determine a first random access resource based on the grouping information

S540: Send a random access preamble on the first random access resource

FIG. 5

600

```
┌─────────────────┐                              ┌─────────────────┐
│ Terminal device │                              │ Network device  │
└─────────────────┘                              └─────────────────┘
         │                                                 │
         │◄──────── S610: First correspondence ───────────│
         │                                                 │
         │◄──────── S620: SSB grouping information ────────│
         │                                                 │
         │◄──────────────── S630: SSB ────────────────────│
```

┌─────────────────────────┐
│ S640: Obtain a first     │
│ detection sequence based │
│ on the grouping          │
│ information              │
└─────────────────────────┘

┌─────────────────────────────┐
│ S650: Determine a first random│
│ access resource based on the  │
│ first detection sequence and the│
│ first correspondence          │
└─────────────────────────────┘

```
         │       S660: Send a random access preamble       │
         │──────── on the first random access resource ───►│
         │                                                 │
```

┌──────────────────────────────┐
│ S670: Determine the first      │
│ detection sequence based on the│
│ first random access resource   │
└──────────────────────────────┘

┌──────────────────────────────┐
│ S680: Determine a first peak based│
│ on the first detection sequence and│
│ a second correspondence        │
└──────────────────────────────┘

```
         │        S690: Send a random access               │
         │◄────── response by using the first peak ────────│
         │                                                 │
```

FIG. 6

700

```
┌─────────────────┐                              ┌─────────────────┐
│ Terminal device │                              │ Network device  │
└────────┬────────┘                              └────────┬────────┘
         │          710: Second correspondence            │
         │◄─────────  and third correspondence ───────────│
         │                                                │
         │◄──────── S720: SSB grouping information ────────│
         │                                                │
         │◄───────────────── S730: SSB ───────────────────│
```

S740: Obtain a first detection sequence based on the grouping information

S750: Determine a first peak based on the first detection sequence and the second correspondence

S760: Determine a first random access resource based on the first peak and the third correspondence

S770: Send a random access preamble on the first random access resource

S780: Determine the first peak based on the first random access resource and the third correspondence

S790: Send a random access response by using the first peak

FIG. 7

800

```
┌─────────────────┐                              ┌─────────────────┐
│ Terminal device │                              │ Network device  │
└─────────────────┘                              └─────────────────┘
         │                                                 │
         │◄──────── 810: Fourth correspondence ────────────│
         │                                                 │
         │◄──────── S820: SSB grouping information ─────────│
         │                                                 │
         │◄──────────────── S830: SSB ─────────────────────│
         │                                                 │
┌────────┴────────────┐                                    │
│ S840: Determine a   │                                    │
│ first peak based on │                                    │
│ the grouping        │                                    │
│ information         │                                    │
└────────┬────────────┘                                    │
┌────────┴─────────────────┐                               │
│ S850: Determine a first  │                               │
│ random access resource   │                               │
│ based on the first       │                               │
│ peak and a second        │                               │
│ correspondence           │                               │
└────────┬─────────────────┘                               │
         │                                                 │
         │──── S860: Send a random access preamble ───────►│
         │       on the first random access resource       │
         │                                                 │
         │                               ┌─────────────────┴────────────┐
         │                               │ S870: Determine the first    │
         │                               │ peak based on the first      │
         │                               │ random access resource and   │
         │                               │ the fourth correspondence    │
         │                               └─────────────────┬────────────┘
         │                                                 │
         │◄──────── S880: Send a random access ────────────│
         │        response by using the first peak         │
         │                                                 │
```

FIG. 8

900

Transceiver unit 910

Processing unit 920

FIG. 9

1000

Sending unit 1010

Receiving unit 1020

FIG. 10

1100

Processor
1110

Transceiver
1130

Memory
1120

FIG. 11

1200

Antenna

Radio frequency circuit

1210

Memory

Processor

1220

Input/Output apparatus

FIG. 12

1300

```
┌ ─ ─ ─ ─ ─ ─ ─ ─ ─ ─ ─ ─ ─ ─ ─ ┐
│  ┌─────────────────────────┐  │
│  │  ┌──────────┐           │  │
│  │  │ Antenna  │           │  │        1310
│  │  └────┬─────┘           │  │
│  │  ┌────┴──────────────┐  │  │
│  │  │ Radio frequency   │  │  │
│  │  │     circuit       │  │  │
│  │  └───────────────────┘  │  │
├ ─│─ ─ ─ ─ ─ ─ ─ ─ ─ ─ ─ ─│─ ┤
│  │ ┌────────┐ ┌─────────┐ │  │        1320
│  │ │ Memory │ │Processor│ │  │
│  │ └────────┘ └─────────┘ │  │
└ ─│─ ─ ─ ─ ─ ─ ─ ─ ─ ─ ─ ─│─ ┘
   └─────────────────────────┘
```

**FIG. 13**

## INTERNATIONAL SEARCH REPORT

| International application No. |
|---|
| **PCT/CN2019/121924** |

| **A.** | **CLASSIFICATION OF SUBJECT MATTER** |
|---|---|
| | H04W 74/08(2009.01)i |

According to International Patent Classification (IPC) or to both national classification and IPC

| **B.** | **FIELDS SEARCHED** |
|---|---|

Minimum documentation searched (classification system followed by classification symbols)

H04W,H04B,H04L

Documentation searched other than minimum documentation to the extent that such documents are included in the fields searched

Electronic data base consulted during the international search (name of data base and, where practicable, search terms used)

CNABS, CNTXT, CNKI, VEN, EPTXT, WOTXT, USTXT, 3GPP: 参考信号, 资源, 随机接入, 前导, 波束, 分组, 集合, 波峰, PRACH, group, set, beam, preamble, reference signal, resource, random acces, crest, RS, SSB, RA, RO

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | US 2019110314 A1 (QUALCOMM INCORPORATED) 11 April 2019 (2019-04-11) <br> claim 1, description paragraphs 36-177 | 1, 9-11, 19, 20, 28-30, 38-44 |
| Y | ZTE et al. "Remaining details of RACH procedure, R1-1803610" <br> *3GPP TSG RAN WG1 Meeting #92bis,* 06 April 2018 (2018-04-06), <br> section 2 | 1, 9-11, 19, 20, 28-30, 38-44 |
| A | CN 110099459 A (HUAWEI TECHNOLOGIES CO., LTD.) 06 August 2019 (2019-08-06) <br> entire document | 1-44 |
| A | CN 108092697 A (ZTE CORPORATION) 29 May 2018 (2018-05-29) <br> entire document | 1-44 |
| A | US 2018279387 A1 (ELECTRONICS & TELECOMMUNICATIONS RES INST) 27 <br> September 2018 (2018-09-27) <br> entire document | 1-44 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2020** | **26 August 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2019/121924** |

| Patent document cited in search report | | | Publication date (day/month/year) | Patent family member(s) | | | Publication date (day/month/year) |
|---|---|---|---|---|---|---|---|
| US | 2019110314 | A1 | 11 April 2019 | TW | 201924415 | A | 16 June 2019 |
| | | | | WO | 2019074702 | A1 | 18 April 2019 |
| | | | | CN | 111183684 | A | 19 May 2020 |
| | | | | IN | 202047010066 | A | 19 May 2020 |
| CN | 110099459 | A | 06 August 2019 | WO | 2019149088 | A1 | 08 August 2019 |
| CN | 108092697 | A | 29 May 2018 | WO | 2018206017 | A9 | 22 August 2019 |
| | | | | WO | 2018206017 | A1 | 15 November 2018 |
| US | 2018279387 | A1 | 27 September 2018 | US | 10609736 | B2 | 31 March 2020 |

Form PCT/ISA/210 (patent family annex) (January 2015)